# EUROPÄISCHE PATENTSCHRIFT

(11) **EP 0 900 159 B1**
(45) Veröffentlichungstag und Bekanntmachung des Hinweises auf die Patenterteilung: **09.08.2000**
(21) Anmeldenummer: 97923943.1
(22) Anmeldetag: 20.05.1997
(51) Int. Cl.: B60T 8/00

(54) **VERFAHREN ZUR ELEKTRONISCHEN BREMSKRAFTVERTEILUNG**
ELECTRONIC BRAKING-FORCE-DISTRIBUTION METHOD
PROCEDE DE REPARTITION ELECTRONIQUE DE LA FORCE DE FREINAGE

(30) Priorität: 22.05.1996 DE 19620585
(43) Veröffentlichungstag der Anmeldung: 10.03.1999
(73) Patentinhaber: Continental Teves AG & Co. oHG, 60488 Frankfurt (DE)
(72) Erfinder: ZENZEN, Markus, D-65795 Hattersheim 2 (DE); PRÖGER, Thomas, D-63322 Rödermark 1 (DE); SCHMIDT, Robert, D-56477 Rennerod (DE)
(74) Vertreter: Blum, Klaus-Dieter
(86) Internationale Anmeldenummer: EP9702558
(87) Internationale Veröffentlichungsnummer: WO9744222

(56) Entgegenhaltungen:
- EP-A- 0 392 815
- DE-A- 3 133 442
- DE-A- 4 337 498
- DE-A- 4 414 980
- DE-A- 4 417 935

## Beschreibung

Die vorliegende Erfindung betrifft ein Verfahren zur elektronischen Bremskraftverteilung (EBV) gemäß dem Oberbegriff des Anspruchs 1.

Aus der DE 43 37 498 A1 ist ein derartiges Verfahren bekannt. Es dient in erster Linie dazu, während einer Bremsung zu verhindern, daß die Hinterräder vor den Vorderrädern blockieren. Das Verfahren zur EBV soll aber immer nur dann angewendet werden, wenn es tatsächlich erforderlich ist, so daß jeweils eine möglichst große Bremskraftausnutzung auch an den Hinterrädern erfolgt. Daher sind bestimmte Eintrittskriterien zur Einleitung einer sogenannten Druckhaltephase an den Hinterradbremsen erforderlich. Das bekannte Verfahren fragt hierzu bestimmte Bedingungen ab. Nur dann, wenn beim o.g. bekannten Verfahren der vom Bremspedal ausgelöste Bremslichtschalter eingeschaltet ist, die berechnete oder geschätzte Fahrzeugreferenzgeschwindigkeit einen Schwellenwert überschreitet, die Fahrzeugbeschleunigung kleiner ist als beispielsweise -0,25*g und zusätzlich die Hinterradgeschwindigkeit jeweils um einen bestimmten Betrag kleiner ist als die des vor ihm liegenden Vorderrades, wird eine EBV eingeleitet. Eine Differenz zwischen der Hinterradgeschwindigkeit und der Vorderradgeschwindigkeit, wobei das Hinterrad langsamer läuft als das Vorderrad, stellt sich während einer Bremsung nur dann ein, wenn der Bremsschlupf des Hinterrades größer ist als der des Vorderrades. Bei einer schnellen Bremsbetätigung durch den Fahrer reicht ein solches Kriterium nicht aus, bei welchem ein EBV-Eintritt erst dann erfolgt, wenn die Hinterachse bereits einen größeren Bremsschlupf als die Vorderachse aufweist. In diesem Fall hat die reale Bremskraftverteilung die Kurve der idealen Bremskraftverteilung bereits geschnitten, so daß eine optimale Kraftschlußausnutzung nicht mehr gegeben ist. Fahrzeuge, die einen hohen Bremskraftanteil an der Hinterachse haben, bei welchen also dann die reale Bremskraftverteilung die Kurve der idealen Bremskraftverteilung schon bei niedrigen Drücken schneidet, weisen bei höheren Geschwindigkeiten dann ein Stabilitätsproblem auf. Das Druckniveau der Hinterachse ist dann zu hoch. Ein Grund für dieses Verhalten ist u.a. die Tatsache, daß in bekannten Verfahren zur EBV der Bremsschlupf bzw. die Einzelradgeschwindigkeit ein Filter durchlaufen, welches ein zu empfindliches Ansprechen der EBV verhindern soll, indem kurzzeitige Spitzenwerte geglättet werden.

Der vorliegenden Erfindung liegt die Aufgabe zugrunde, ein Verfahren der eingangs genannten Art zur elektronischen Bremskraftverteilung zu schaffen, welches auch bei Filterung von Einzelradgeschwindigkeiten oder des Bremsschlupfes rechtzeitig eine Druckhalte- oder Druckabbauphase einzuleiten vermag.

Diese Aufgabe wird gelöst in Verbindung mit den kennzeichnenden Merkmalen des Anspruchs 1. Das Prinzip der vorliegenden Erfindung besteht darin, zumindest bei guter Fahrbahnbeschaffenheit, wenn also eine zuverlässige Fahrzeug-Referenzgeschwindigkeit ermittelt werden kann, nicht den Bremsschlupf der Hinterachse als Eintrittskriterium zur EBV heranzuziehen, sondern die Radumfangsverzögerung der Hinterräder. Erfolgt eine schnelle Bremsbetätigung im Teilbremsbereich, so wird ein EBV-Eintritt in eine Druckhaltephase von einer Hinterradverzögerung von a_{Rad} <-0,7*g abhängig gemacht.

Zusätzlich empfiehlt es sich abzufragen, ob die Verzögerung des Fahrzeugs a_{FZG} < -0,1* g ist. Mit dieser Abfrage wird sichergestellt, daß es sich nicht um ein Durchfahren eines Schlagloches während einer Beschleunigungsphase handelt.

Die Eintrittsschwelle in die EBV kann während der Bremsung angehoben werden, da bei Filterung der Radgeschwindigkeiten sich der gefilterte Wert allmählich dem realen Wert anpaßt.

Eine Anhebung der Schwelle kann auch mit zunehmender Fahrzeugverzögerung erfolgen, beispielsweise bis zu einem maximalen Wert von a_{Rad} = -1,3*g. Die Schwelle ist definitionsgemäß also umso höher, je größer der Betrag der negativen Beschleunigung ist. Auch hier ist der Grund für die Anhebung der Schwelle darin zu sehen, daß bei schnellen Bremsbetätigungen im Teilbremsbereich der gefilterte Bremsschlupf bzw. die gefilterte Einzelradgeschwindigkeit zeitverschoben zum ungefilterten Wert zunimmt, wodurch zu Beginn einer Bremsung der ungefilterte Bremsschlupf bzw. die ungefilterte Geschwindigkeit unter Umständen beträchtlich größersein können als der gefilterte Wert. Somit ist ein EBV-Eintritt in die Druckhaltephase zu Beginn einer schnellen Bremsbetätigung über ein empfindlicheres Radverzögerungskriterium notwendig, als im Verlauf der Bremsung. Es wird rechtzeitig ein niedrigeres Druckniveau an der betroffenen Hinterradbremse bewirkt und somit die Fahrzeugstabilität erhöht.

Bei langsamen Bremsbetätigungen kann sich der gefilterte dem ungefilterten Wert schneller anpassen. Hinzu kommt eine geringere Fahrzeugdynamik zu Beginn einer Bremsbetätigung, also ein schwächeres Einschwingverhalten des Fahrzeugs. Ein Erhöhen der EBV-Eintrittsschwelle mit zunehmender Fahrzeugverzögerung oder bei länger anhaltender Bremsung ist deshalb sinnvoll.

Wenn eines der Hinterräder das Eintrittskriterium erfüllt, kann aus Stabilitätsgründen trotzdem eine Druckhaltephase an beiden Hinterrädern eingeleitet werden (Select-low). Die anschließende Regelung kann weiterhin im Select-low-Betrieb oder auch radindividuell erfolgen. Die Wahl der weiteren Regelung hängt davon ab, wie kritisch ein Fahrzeug auf derartige Fahrsituationen reagiert.

Auch während einer Antiblockierregelung verhalten sich Fahrzeuge beim frühen Einleiten einer Druckhaltephase stabiler.

Durch die Abfrage eines Bremslichtschaltersignals, welches von der Betätigung eines Bremspedals abhängig ist, kann zusätzlich ausgeschlossen werden, daß die Notwendigkeit einer elektronischen Bremskraftverteilung fehlerhaft erkannt wird. Eine Druckhaltephase kann dann tatsächlich nur bei betätigtem Bremspedal eingeleitet werden.

Bei schlechter Fahrbahnbeschaffenheit kann es vorkommen, daß sogar mehrere Räder stark verzögert werden, weil sie eine Störung beispielsweise durch ein Schlagloch erfahren. Dann errechnet sich möglicherweise auch die Fahrzeug-Referenzgeschwindigkeit niedriger, so daß u.U. eine Fahrzeugbeschleunigung erkannt wird, die in der Tat nicht vorhanden ist. Es empfiehlt sich daher, bei schlechter Fahrbahnbeschaffenheit konventionelle Eintrittskriterien in eine Druckhaltephase anzuwenden.

Um eine solche schlechte Fahrbahnbeschaffenheit zu erkennen, können die einzelnen Radbeschleunigungen beobachtet werden. Es empfiehlt sich besonders, hierzu die Räder der Vorderachse zu beobachten, da diese vor den Rädern der Hinterachse jeweils den neuen Fahrbahnzustand erfahren.

In Weiterbildung der Erfindung kann am Bremspedal ein Wegsensor angebracht sein, der darüber Aufschluß gibt, wie schnell das Bremspedal betätigt wird. Dementsprechend kann schon zu Beginn der Bremsung der die Eintrittsstelle für die Druckhaltephase bildende Wert der Einzelradbeschleunigung auf einen empfindlichen oder unempfindlichen Eintritt in die Regelung eingestellt werden.

Aber auch ohne Wegsensor wird bei schnellem Betätigen der Bremse mit Erkennen einer empfindlichen Radverzögerungsschwelle, also beispielsweise a_{Rad} < -0,7*g an einem Hinterrad ein rechtzeitiges Eintreten in die Druckhaltephase möglich. Durch langsamen Anstieg der Eintrittsschwelle wird das Kriterium auch einer langsamen Bremsbetätigung gerecht, da der gefilterte Wert der Einzelradverzögerung näher am augenblicklichen ungefilterten Wert liegt als bei einer schnellen Bremsbetätigung.

Bei schnellen Übergängen ins Antiblockiersystem wird durch das erfindungsgemäße Verfahren verhindert, daß allen vier Rädern gleichzeitig ein hoher Schlupf auftritt und die aus der höchsten Einzelraddrehzahl berechnete Fahrzeug-Referenzgeschwindigkeit zu tief angesetzt wird. Dies ist ein sicherheitsrelevanter Vorteil, da eine zu tief berechnete Fahrzeug-Referenzgeschwindigkeit immer zu einer unempfindlichen Blockierschutzregelung führt.

## Patentansprüche

1. Verfahren zur elektronischen Bremskraftverteilung auf Vorder- und Hinterachsbremsen eines zweiachsigen Fahrzeugs durch Variation der Hinterachsbremsdrücke, dadurch **gekennzeichnet**, daß eine elektronische Bremskraftverteilung während einer pedalbetätigten Bremsung immer dann eingeleitet wird, wenn an mindestens einem Hinterrad eine Radumfangsverzögerung von a_{Rad} < -k*g auftritt, wobei k ein Faktor der Größe k ≥ 0,6 ist.

2. Verfahren nach Anspruch 1, dadurch **gekennzeichnet**, daß eine pedalbetätigte Bremsung dann angenommen wird, wenn die berechnete Fahrzeugverzögerung a_{FZG} < -1*g ist, wobei 1 ein Faktor der Größe 0,1 ≤ 1 ≤ 0,5 ist.

3. Verfahren nach einem der vorhergehenden Ansprüche, dadurch **gekennzeichnet**, daß der Faktor k im Verlauf der Bremsung wächst.

4. Verfahren nach einem der vorhergehenden Ansprüche, dadurch **gekennzeichnet**, daß der Faktor k mit dem Betrag der Fahrzeugverzögerung wächst.

5. Verfahren nach Anspruch 4, dadurch **gekennzeichnet**, daß der maximale Wert für den Faktor k nicht über 1,5 liegt.

6. Verfahren nach einem der vorhergehenden Ansprüche, dadurch **gekennzeichnet**, daß zumindest bei schlechter Fahrbahnbeschaffenheit eine elektronische Bremskraftverteilung nach anderen Kriterien eingeleitet wird.

7. Verfahren nach einem der vorhergehenden Ansprüche, dadurch **gekennzeichnet,** daß Rückschlüsse auf die Fahrbahnbeschaffenheit aus dem Lauf der Vorderräder gezogen werden.

## Claims

1. Method of electronic brake force distribution to front-axle and rear-axle brakes of a two-axle vehicle by variation of the rear-axle brake pressures,
**characterized** in that electronic brake force distribution during pedal-operated braking is always initiated when a wheel circumferential deceleration of a_{Rad} < -k*g occurs on at least one rear wheel, and k is a factor of the magnitude k ≥ 0.6.

2. Method as claimed in claim 1,
**characterized** in that pedal-operated braking is assumed when the calculated vehicle deceleration is a_{FZG} < -1*g, and 1 is a factor of the magnitude 0.1 ≤ 1 ≤ 0.5.

3. Method as claimed in any one of the preceding claims,
**characterized** in that the factor k increases in the course of the braking operation.

4. Method as claimed in any one of the preceding claims,
**characterized** in that the factor k increases with the amount of the vehicle deceleration.

5. Method as claimed in claim 4,
**characterized** in that the maximum value for the factor k is not in excess of 1.5.

6. Method as claimed in any one of the preceding claims,
**characterized** in that electronic brake force distribution is initiated according to different criteria at least under poor road surface conditions.

7. Method as claimed in any one of the preceding claims,
**characterized** in that the front wheel run permits making conclusions with regard to the road surface conditions.

## Revendications

1. Procédé de répartition électronique de force de freinage sur les freins d'essieu avant et d'essieu arrière d'un véhicule à deux essieux, au moyen d'une variation des pressions de frein d'essieu arrière, caractérisé en ce qu'une répartition électronique de force de freinage pendant un freinage commandé par pédale est toujours introduite si une décélération circonférentielle de roue a_{Rad} < - k*g, k étant un facteur de valeur k ≥ 0,6, se présente sur au moins une roue arrière.

2. Procédé suivant la revendication 1, caractérisé en ce qu'un freinage commandé par pédale est supposé lorsque la décélération de véhicule calculée a_{FZG} < - 1*g, 1 étant un facteur de valeur 0,1 ≤ 1 ≤ 0,5.

3. Procédé suivant l'une des revendications précédentes, caractérisé en ce que le facteur k croît au cours du freinage.

4. Procédé suivant l'une des revendications précédentes, caractérisé en ce que le facteur k croît avec la valeur de la décélération du véhicule.

5. Procédé suivant la revendication 4, caractérisé en ce que la valeur maximale pour le facteur k ne dépasse pas 1,5.

6. Procédé suivant l'une des revendications précédentes, caractérisé en ce qu'au moins dans le cas d'une mauvaise qualité de la voie de roulement, une répartition électronique de force de freinage est introduite suivant d'autres critères.

7. Procédé suivant l'une des revendications précédentes, caractérisé en ce que des conclusions concernant la qualité de la voie de roulement sont déduites de la marche des roues avant.
